# EUROPÄISCHE PATENTSCHRIFT

(11) **EP 1 981 153 B1**
(45) Veröffentlichungstag und Bekanntmachung des Hinweises auf die Patenterteilung: **12.12.2018**
(21) Anmeldenummer: 08011854.0
(22) Anmeldetag: 06.10.2003
(51) Int. Cl.: H02K 11/04

(54) **Elektromotor mit daran befestigtem Elektronikgehäuse**
Electric motor with attached electronic housing
Moteur électrique relié à un boîtier électronique

(43) Veröffentlichungstag der Anmeldung: 15.10.2008
(62) Teilanmeldung aus: 03022608.8
(73) Patentinhaber: Ziehl-Abegg AG, 74653 Künzelsau (DE)
(72) Erfinder: Ehrmann, Bärbel, 87980 Lillstadt (DE); Leutwein, Gerhard, 74653 Künzelsau-Gaisbach (DE); Kress, Volker, 74635 Kupferzell (DE)
(74) Vertreter: Samson & Partner Patentanwälte mbB

(56) Entgegenhaltungen:
- EP-A- 1 523 087
- DE-A1- 19 831 931

## Beschreibung

Die Erfindung betrifft einen Elektromotor mit einer Elektronik zum Steuern des Elektromotors.

Die DE 198 31 931 A1 zeigt einen Elektromotor, bei dem Motorkenndaten in einem nichtflüchtigen Speicher gespeichert sind, der zusammen mit einem Mikroprozessor auf einer gemeinsamen Platine innerhalb des Gehäuses des Elektromotors angeordnet ist. Diese Platine ist von außen an einer geeigneten Stelle des Motorgehäuses zugänglich. Die Platine befindet sich zusammen mit einem Motorsensor im Gehäuse des Elektromotors und ist über ein Anschlusskabel mit einem in einem weiteren Gehäuse aufgenommenen Leistungsteil verbunden, das einen Regler und einen Stromrichter enthält.

Die DE 196 370 36 A1 zeigt einen Elektromotor mit einem Motorgehäuse, das den Rotor und den Stator enthält, einen Motorflansch, der einen Abschnitt des Motorgehäuses bildet, einer Elektronik zum Steuern des Elektromotors, und einem Elektronikgehäuse, das die Elektronik aufnimmt und am Motorgehäuse befestigt ist. Das Elektronikgehäuse und das Motorgehäuse bilden zwei separate Gehäuseeinheiten.

Die EP 1 220 422 A1 zeigt einen Außenläufermotor mit einem Klemmenkasten, der aus einem Oberteil und einem ein Kontaktierungsteil zur Schaltscheibe des Stators bildendes Unterteil besteht. Das Oberteil des Klemmenkastens bildet eine separate Baugruppe, die nachträglich am Motor montiert werden kann, während das Unterteil einen Abschnitt des Motorgehäuses bildet. Der Motor wird über direkt in das Motorgehäuse eingreifende Haltebolzen aufgehängt.

Die DE 197 23 664 A1 zeigt eine Steuereinheit für einen Elektromotor mit einer in einem flachen schalenförmigen Gehäuse aus einem elektrisch isolierenden Werkstoff untergebrachten Elektronik. Der Elektromotor wird direkt über sein Motorgehäuse aufgehängt.

Die DE 101 61 366 A1 zeigt einen Außenläufermotor, der einen Motorträger als Teil seines Motorgehäuses aufweist, über den der Motor aufgehängt werden kann. Am Motorträger ist ein Steuermodul angebracht.

Die DE 196 37 192 A1 zeigt einen Elektromotor mit einem Steuermodul, bei dem sich Motorgehäuse und Steuermodulgehäuse eine Gehäusewand teilen.

Die DE 38 05 060 A1 zeigt einen Elektromotor mit einem nachträglich aufsteckbaren Systemträger, der elektrische Bauelemente zur Steuerung des Elektromotors enthält. Der Elektromotor selbst wird direkt über sein Gehäuse aufgehängt.

Die DE 101 07 248 A1 zeigt einen Elektromotor mit einem Motorgehäuse, auf dem ein Elektronikgehäuse in vier um jeweils 90° zueinander verdrehten Positionen aufgesetzt werden kann.

Die DE 101 37 371 A1 zeigt ein mehrfunktionales Trägerteil für einen Elektromotor, an dem die Stromversorgung, Statorfelderzeugung, Lagerung und Gehäuse-Zusätze für übergeordnete Systeme integrierbar sind. Das Trägerteil bildet eine gemeinsame Gehäusewand für den Elektromotor und die Elektronik.

Der Erfindung liegt die Aufgabe zugrunde, einen Elektromotor mit einer Motorelektronik zu schaffen, deren Reparatur im Bedarfsfall vereinfacht werden kann.

Die Erfindung löst diese Aufgabe mit dem Gegenstand des Anspruchs 1. Bevorzugte Ausführungsbeispiele sind in den Unteransprüchen beschrieben.

Die Erfindung sowie weitere Vorteile und Merkmale der Erfindung werden nunmehr anhand bevorzugter Ausführungsbeispiele mit Bezug auf die beigefügte Zeichnung näher erläutert, in der:
- Fig. 1: eine schematische Explosionsansicht eines erfindungsgemäßen Elektromotors von schräg oben zeigt, und
- Fig. 2: eine schematische Explosionsansicht des erfindungsgemäßen Elektromotors aus Fig. 1 von schräg unten zeigt.

Gemäß der Erfindung ist zum montagefreundlichen Anschließen oder Austauschen der Elektronik diese in ein Leistungsteil und ein Anschlußteil unterteilt, wobei das Anschlußteil und das Leistungsteil über eine Steckverbindung elektrisch miteinander verbunden sind. Hierbei kann das Anschlußteil in einem separaten Gehäuse untergebracht sein, das am Deckel eines Elektronikgehäuses lösbar befestigt ist. Wegen der oftmals aufwendigen Anpassung der zahlreichen Parameter einer auszutauschenden Elektronik an den zugehörigen Elektromotor umfaßt das Anschlußteil eine Steuerung mit Speicher zum Speichern der Anschlußparameter des Elektromotors. Es kann hierbei von Vorteil sein, wenn die Steuerung des Anschlußteils als Master-Einheit ausgestaltet ist, die mit Steuerung des Leistungsteils elektrisch verbunden ist, die als zugehörige Slave-Einheit ausgestaltet ist.

Ein Ausführungsbeispiel betrifft einen Elektromotor mit einem im wesentlichen geschlossenen Motorgehäuse, das den Rotor und den Stator enthält, und einem im wesentlichen geschlossenen Elektronikgehäuse, das eine Elektronik zum Steuern des Elektromotors aufnimmt. Das Elektronikgehäuse und das Motorgehäuse sind hierbei als zwei separate Gehäuseeinheiten ausgebildet. Unter dem Begriff "im wesentlichen geschlossen" wird ein Gehäuse verstanden, das im Prinzip alle Seiten der darin aufgenommenen Einheit verschließt. Selbstverständlich können in diesen Gehäusen Durchbrüche oder Öffnungen vorgesehen sein, beispielsweise zum Durchführen von entsprechenden Anschlußkabeln oder zum Einlaß von Kühlluft in das Gehäuseinnere, etc. Ein Abschnitt des Motorgehäuses bildet einen Motorflansch, an dem das Elektronikgehäuse befestigt ist. Ein Abschnitt des Elektronikgehäuses bildet hingegen einen Zwischenflansch für die Aufhängung des Elektromotors. Somit verläuft der Kraftschluß der Motoraufhängung vom den Zwischenflansch bildenden Abschnitt des Elektronikgehäuses zum den Motorflansch bildenden Abschnitt des Motorgehäuses. Die Elektronik kann jede Art von Steuerelektronik umfassen, mit der der Elektromotor gesteuert werden kann, beispielsweise dessen Drehzahl. So benötigen Gleichstrommotoren in der Regel eine Steuerelektronik zum Kommutieren der elektrischen Versorgungsströme auf die einzelnen Statorwicklungsstränge; Wechselstrommotoren benötigen eine Elektronik zum Regeln ihrer Drehzahl, etc.. Unter dem Begriff "Elektronik" wird damit jede elektronische Schaltung verstanden, die zu irgendeiner Steuerung des Elektromotors dienlich ist, nicht jedoch eine einfache Anschlußklemme, mit der die Statorwicklungen an ein externes Anschlußkabel angeschlossen werden können. Im übrigen kann die Elektronik auch in mehr als einem separaten Elektronikgehäuse untergebracht sein.

Gemäß einem weiteren Ausführungsbeispiel ist der.Elektromotor als Außenläufermotor mit einem glockenförmigen Rotor ausgestaltet. Der Motorflansch kann dabei als die Statorplatte des Außenläufermotors ausgebildet sein. Der glockenförmige Rotor bildet bei diesem Motortyp gleichzeitig einen Abschnitt des Motorgehäuses. Alternativ kann der Elektromotor jeglicher Art sein.

Bei einem Ausführungsbeispiel ist das Elektronikgehäuse zweiteilig aus einem Unterteil und einem Deckel aufgebaut, wobei das Unterteil am Motorflansch befestigt ist. Alternativ kann das Elektronikgehäuse auch aus mehr als zwei Teilen aufgebaut sein, und ein anderer Teil mit dem Motorflansch befestigt sein.

Bei einem Ausführungsbeispiel ist das Unterteil becherförmig mit einer im wesentlichen kreisrunden Außenseite ausgebildet und weist von seiner Außenseite radial abstehende Aufhängungsmittel auf. Über diese Aufhängungsmittel wird der Elektromotor aufgehängt. Alternativ können die Aufhängungsmittel direkt in die Gehäusewand des Elektronikgehäuses integriert sein. So kann in einem anderen Ausführungsbeispiel der Boden unterschiedliche Durchmesser haben und/oder vorgegebene Befestigungslöcher als Aufhängungsmittel an unterschiedlichen Positionen im Boden vorgesehen sein. Durch Variation der Aufhängungsmittel kann ein und derselbe Elektromotor an unterschiedlichen Befestigungen aufgehängt werden.

Bei einem Ausführungsbeispiel weist der Elektromotor eine elektrische Verbindungsleitung auf, die die Statorwicklung im Motorinneren mit der Elektronik im Elektronikgehäuse verbindet und die durch den Motorflansch und durch das Elektronikgehäuse geführt ist. Diese Durchführung durch Motorflansch und Elektronikgehäuse ist nach außen abgedichtet. Zudem umfaßt die Verbindungsleitung eine im Elektronikgehäuse vorgesehene Steckverbindung, mit der die Elektronik elektrisch von der Statorwicklung getrennt werden kann.

In einem Ausführungsbeispiel weist der Deckel des Elektronikgehäuses an seiner Außenseite Kühlrippen zum Ableiten der von der Elektronik erzeugten Wärme nach außen auf. Zudem kann die Innenform des Elektronikgehäuses an die Außenform der aufgenommenen Elektronik angepaßt sein, um die Wärmekopplung zwischen Elektronik und Elektronikgehäuse zu optimieren. In einem anderen Ausführungsbeispiel können zusätzlich oder alternativ weitere Kühlmaßnahmen für die Elektronik getroffen werden, beispielsweise im Elektronikgehäuse vorgesehene Kühlkanäle und aktive Lüftungen, falls erforderlich.

In einem Ausführungsbeispiel sind das Unterteil und/oder der Deckel als Gußteil gefertigt. Alternativ können auch andere Materialien verwendet werden.

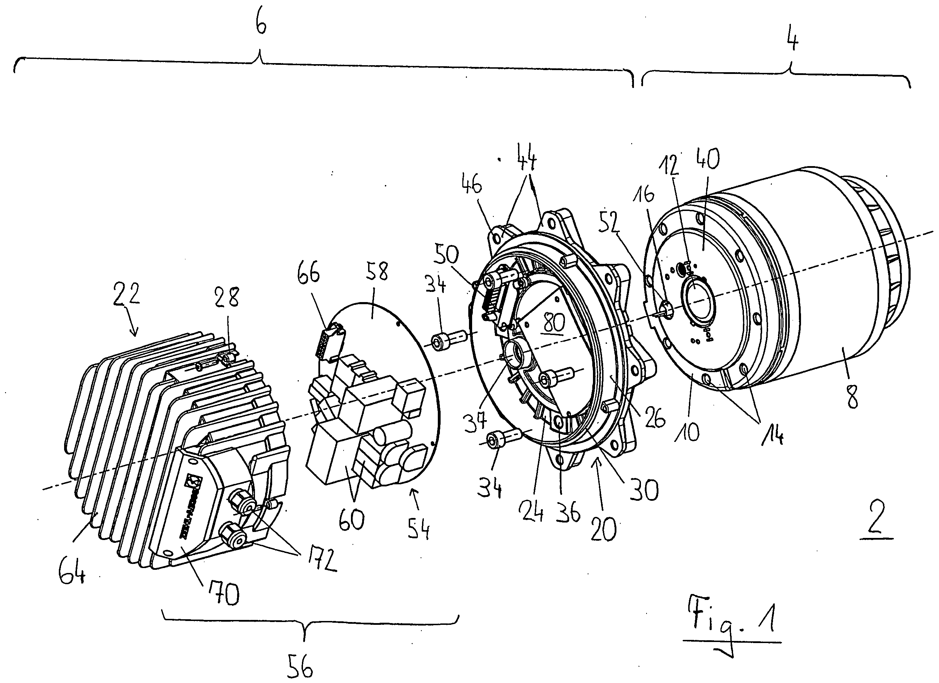

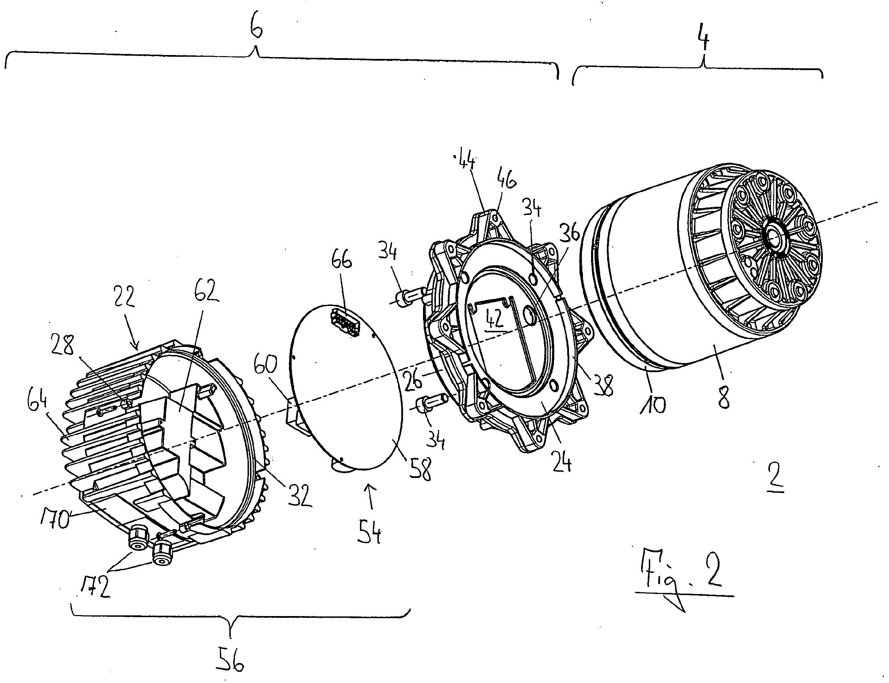

Fig. 1 und 2 zeigen einen Außenläufermotor 2, der ein Motorgehäuse 4 und ein Elektronikgehäuse 6 umfaßt. Das Motorgehäuse 4 setzt sich aus der Außenwand eines glockenförmigen Rotors 8 und einer Statorplatte 10 zusammen. Innerhalb des Motorgehäuses 4 befindet sich der an der Statorplatte 10 befestigte Stator (in der Zeichnung nicht näher dargestellt). Die Statorplatte ist im wesentlichen kreisrund mit einer zentral eingelassenen Rotorbuchse 12 zur Lagerung des Rotors. Über ihren Außenumfang verteilt sind Befestigungslöcher 14 zur Befestigung des Elektronikgehäuses 6 an der Statorplatte 10 vorgesehen. Der Außenläufermotor 2 dient beispielsweise als Antrieb für einen Ventilator, wobei hierzu unmittelbar am Rotor 8 (in der Zeichnung nicht näher dargestellte) Anschlußstutzen zur Befestigung von Ventilatorflügeln vorgesehen sein können.

Durch eine Durchgangsbohrung 16 in der Statorplatte 10 ist ein Verbindungskabel 52 aus dem Inneren des Motorgehäuses 4 herausgeführt, das im Motorinneren mit der Statorwicklung verbunden ist.

Das Elektronikgehäuse 6 setzt sich aus einem als Zwischenflansch dienenden Unterteil 20 und einem Deckel 22 zusammen. Das Unterteil 20 umfaßt einen im wesentlichen plattenförmigen Bodenabschnitt 24, der von der Form an die Statorplatte 10 angepaßt ist. Mit dem Bodenabschnitt 24 ist ein kurzer zylindrischer Wandabschnitt 26 integral verbunden, dessen Außendurchmesser im wesentlichen dem Innendurchmesser des topfförmigen Deckels 22 entspricht. Der Deckel 22 wird bei der Montage auf das Unterteil 20 aufgeschoben und über Befestigungsmittel 28 (hier Schrauben und am Wandabschnitt 26 vorgesehenen zugehörige Schraubgewinde) am Unterteil 20 befestigt. Zum Erhalt eines hohen Feuchtigkeitsschutzes ist auf der Stirnseite des Wandabschnitts 26 ein O-Ring 30 eingelassen, der bei zusammengebautem Deckel 22 und Unterteil 20 auf eine ringförmig umlaufende Schulter 32 der zylindrischen Innenwand des Deckels 22 stößt.

Das Unterteil 20 ist mittels Befestigungsschrauben 34, die durch Durchgangslöcher 36 im Bodenabschnitt 24 geführt und in entsprechende Gewinde der Befestigungslöcher 14 geschraubt sind, fest am Motorgehäuse 4 befestigt. Im Bodenabschnitt 24 befindet sich ein Durchlaß 37 zur Durchführung des Verbindungskabels 52 in das Innere des Elektronikgehäuses 6. Hierzu liegen die Durchgangsöffnung 16 im Motorgehäuse 4 und der Durchlaß 37 im Unterteil 20 des Elektronikgehäuses 6 übereinander. Der Bodenabschnitt 24 weist an seiner der Statorplatte 10 zugewandten Außenseite eine umlaufende zylindrische Zentrierung 38 auf, deren Innendurchmesser an den Außendurchmesser der Statorplatte 10 angepaßt ist. Zudem ist ein kreisförmiger Plattenbereich 40 der Statorplatte 10 nach außen erhöht, dessen Durchmesser bis an den die Befestigungslöcher 14 aufweisenden Randbereich der Statorplatte 10 heranreicht. Der Bodenabschnitt 24 weist an seiner Außenwand eine komplementär ausgebildeten scheibenförmige Einbuchtung 42 auf, die zusammen mit dem Plattenbereich 40 eine weitere Zentrierhilfe beim Befestigen des Unterteils 20 am Motorgehäuse 4 bildet. Zur Abdichtung des zwischen dem Unterteil 20 und der Statorplatte 10 befindlichen Zwischenraums nach außen können unterschiedliche Dichtmittel vorgesehen sein. Beispielsweise können die Durchgangsöffnungen 36 für die Befestigungsschrauben 34 innerhalb dieses Zwischenraums durch einzelne O-Ringe abgedichtet werden. Entsprechendes gilt auch für den dichten Zusammenschluß der Durchgangsöffnung 16 und des Durchlasses 37. Alternativ oder zusätzlich kann ein radial außerhalb der Durchgangslöcher 34 umlaufender O-Ring den gesamten Zwischenraum nach außen abdichten.

An der Außenseite des Unterteils 20 sind in radialer Verlängerung des Bodenabschnitts 24 sternförmig angeordnete Befestigungsstutzen 44 mit darin enthaltenen Befestigungslöchern 46 vorgesehen. Über diese Befestigungslöcher 46 wird der Außenläufermotor 2 aufgehängt. Der Kraftschluß der Motoraufhängung läuft damit von den Befestigungsstutzen 44 über das Unterteil 20 zur Statorplatte 10. Damit übernimmt das Unterteil 20 eine Zwischenflanschfunktion. Durch Vorsehen unterschiedlicher Befestigungsstutzen 44 am Unterteil 20 oder durch unterschiedliches Ausbilden des Unterteils 20 können verschiedene Aufhängungsmöglichkeiten für ein und denselben Außenläufermotor 2 bzw. dessen Motorgehäuse 4 realisiert werden. Damit kann das gesamte Motorteil einschließlich des Motorgehäuses 4 standardisiert gefertigt werden, und durch Vorsehen unterschiedlicher Unterteile 20 kann das standardisierte Motorteil in verschiedenen Anwendungen (z.B. Ventilatoren, etc.) aufgehängt werden. Der Deckel 22 des Elektronikgehäuses 6 kann dabei ebenfalls als Standardteil gefertigt werden, das auf die unterschiedlichen Unterteile 20 paßt. Das gesamte Unterteil 20, bestehend aus dem Bodenabschnitt 24, dem Wandabschnitt 26 und den Befestigungsstutzen 44 ist als einstückiges Gußteil gefertigt.

Im Unterteil 20 ist ein Verbindungsstecker 50 eingeschraubt, der mit dem durch die Durchgangsöffnung 36 ragenden Verbindungskabel 52 verbunden ist. Hierzu sind auf die Enden des Verbindungskabels 52 beispielsweise kleine Stecker aufgecrimpt, die nach Montage des Unterteils 20 auf die Statorplatte 10 einfach in den Verbindungsstecker 50 gesteckt werden können.

Ein Leistungsteil 54 einer im Elektronikgehäuse 65 enthaltenen Elektronik 56 ist auf einer einzelnen Platine 58 untergebracht. Das Leistungsteil 54 kann beispielsweise eine klassische Umrichterbrücke sein, die z.B. Leistungstransistoren (z.B. IGBT, "Isolated Gate Bipolar Transistor", etc.) umfaßt. Das Leistungsteil 54 ist mit auf der Platine 58 aufgebrachten elektronischen Bauteilen 60 aufgebaut. Die Innenwand des Deckels 22 ist an die äußere Form der Platine 58 mit den darauf aufgebrachten Bauteilen 60 angepaßt, um eine gute Wärmebrücke zwischen diesen Bauteilen 60 und der Gehäusewand des Deckels 22 zu schaffen. Wie aus Fig. 2 ersichtlich wird, ist der innere Bodenabschnitt 62 des Deckels 22 überall dort bis an die Platine 58 herangeführt, wo keine elektronischen Bauteile 60 auf der Platine 58 vorgesehen sind, und schließt damit die Bauteile 60 möglichst dicht ein. Die Platine 58 selbst wird vorgefertigt in das Innere des Deckels 22 eingeschoben und dort geeignet befestigt, wobei zusätzlich an geeigneten Stellen Wärmeleitpasten für einen besseren Wärmekontakt, Masseanschlüsse und dergleichen zwischen den Bauteilen 60 und der Wand des Deckels 22 vorgesehen werden.

Die Außenseite des Deckels 22 umfaßt mehrere parallel zueinander angeordnete, axial nach außen ragende Kühlrippen 64 zum Abführen der im Leistungsteil 54 erzeugten Wärme an die Außenluft. Die Stirnenden der Kühlrippen 64 bilden zusammen gesehen eine "topfförmige" Außenform mit einem "flachen" Bodenabschnitt des Deckels 22. Der Deckel 22 ist mit seinen Kühlrippen 64 als Gußteil gefertigt.

Auf der Platine 58 ist ein als Gegenstück zum Verbindungsstecker 50 ausgebildeter Verbindungsstecker 66 aufgebracht, der mit dem Leistungsteil 54 elektrisch verbunden ist. Der Deckel 22 kann daher - entweder zur Erstmontage oder beispielsweise zum Auswechseln des Leistungsteils 54 - zusammen mit dem eingesetzten Leistungsteil 54 auf das Unterteil 20 aufgeschoben werden, wobei dabei eine elektrische Verbindung zwischen den Verbindungssteckern 50 und 66 und damit zwischen dem Leistungsteil 54 und den Statorwicklungen realisiert wird. Die Verbindungsstecker 50 und 66 können derart ausgebildet sein, daß sie Toleranzen beim Montagevorgang ausgleichen. Solche Steckverbindungen sind im Stand der Technik bekannt. Es wird daher an dieser Stelle nicht näher auf die konkrete Ausgestaltung dieser Steckverbindungen eingegangen, sondern auf den einschlägigen Stand der Technik verwiesen.

Der Deckel 22 enthält auf seiner Außenseite ein weiteres Kunststoffgehäuse 70, in dem ein (nicht näher dargestelltes) Anschlußteil der Elektronik 56 untergebracht ist. Das Kunststoffgehäuse 70 ist lösbar am Deckel 22 angebracht und umfaßt zwei Durchführungen 72 zum Durchführen eines (nicht dargestellten) Motoranschlußkabels und einer Steuerleitung nach außen. Innerhalb des Kunststoffgehäuses 70 ist das Motoranschlußkabel mit einer weiteren (in den Figuren nicht näher dargestellten) Platine des Anschlußteils verbunden, das eine eigene Steuerung (z.B. in Form eines Mikrocontrollers samt nicht-flüchtigen Speicher) aufweist. Diese Platine ist über eine Steckverbindung mit einer auf der Platine 58 angebrachten komplementären Steckverbindung elektrisch verbindbar (beide Steckverbinder sind in den Figuren nicht näher dargestellt). Das im Kunststoffgehäuse 70 untergebrachte Anschlußteil dient einer Art "intelligenten" Anschlußmöglichkeit des Außenläufermotors 2. Da für solche Motoren in der Regel eine Vielzahl (z.B. etwa 100) an Parametern einzustellen sind (wie Lehrlaufdrehzahl, Wicklungswiderstand, Reglereinstellungen der Leistungselektronik 54, Diagnoseparameter, etc.), werden diese Parameter alle im Speicher des Mikrocontrollers des Anschlußteils gespeichert. Sollte die Leistungselektronik 54 defekt sein, so wird sie einfach dadurch ausgetauscht, daß der Deckel 22 gelöst und mitsamt der Platine 58 vom Unterteil 20 abgezogen wird, das Kunststoffgehäuse 70 vom Deckel 22 gelöst und mitsamt der darin enthaltenen Steuerung von der Platine 58 abgezogen wird, und anschließend das Leistungsteil 54 samt Deckel 22 ausgetauscht wird. Selbstverständlich kann auch das Leistungsteil 54 unabhängig vom Deckel 22 ausgetauscht werden. Dies erfordert jedoch das Einbringen der genannten Wärmeleitpasten, Masseanschlüsse und dergleichen zwischen den Bauteilen 60 des Leistungsteils 54 und den Kühlrippen 64 des Deckels 22, was bei einer Feldmontage nur umständlich zu realisieren ist. In einem solchen Fall empfiehlt sich der komplette Austausch von Leistungsteil 54 mit Deckel 22. Um dem Monteur das aufwendige Einstellen der vielzähligen Parameter des neuen Leistungsteils 54 zu ersparen (Anzahl der einzustellenden Parameter kann über 100 liegen), sind diese bereits alle in dem im Kunststoffgehäuse 70 enthaltenen Anschlußteil der Elektronik 56 eingespeichert, das ja nicht mit ausgewechselt wird. Auch muß das Motoranschlußkabel nicht neu angeschlossen werden, da es noch an diesem Anschlußteil "hängt".

Der Mikrocontroller im Anschlußteil der Elektronik 56 übernimmt die Master-Funktion für einen weiteren im Leistungsteil 54 enthaltenen und als Slave-Einheit arbeitenden Mikrocontroller. Der Master-Mikrocontroller überträgt alle Einstellungsparameter an den Slave-Mikrocontroller, der entsprechend das Leistungsteil 54 steuert. Die Anmelderin behält sich vor, auf die spezielle Unterteilung der Elektronik in ein Anschlußteil mit einem Master-Mikrocontroller und ein Leistungsteil mit einem Slave-Mikrocontroller sowie die mechanische Trennungsmöglichkeit beider Teile über eine elektrische Steckverbindung unabhängig von der speziellen Ausbildung von Motorgehäuse 4 und Elektronikgehäuse 6 eine Anmeldung einzureichen.

Auf der Innenseite des Bodenabschnitts 24 des Unterteils 20 kann ferner eine plattenförmige Erhebung 80 vorgesehen sein, auf der eine auf einer zusätzlichen Platine aufgebrachte Zusatzelektronik befestigt werden kann. Diese Zusatzelektronik kann optionale Steuerfunktionen bestimmter Außenläufermotoren 2 übernehmen. Sie ist elektrisch über den Verbindungsstecker 50 mit der Elektronik 56 verbunden.

## Patentansprüche

1. Elektromotor mit einer Elektronik (56) zum Steuern des Elektromotors (2), bei dem die Elektronik (56) in ein Leistungsteil (54) und ein Anschlussteil unterteilt ist, wobei das Anschlussteil und das Leistungsteil (54) jeweils auf einer eigenen Platine ausgebildet sind, die über eine Steckverbindung elektrisch miteinander verbunden sind, das Anschlussteil einen als Master-Einheit ausgestaltete Mikrocontroller mit nicht flüchtigen Speicher zum Speichern der Einstellungsparameter des Elektromotors (2) umfasst, der einem als Slave-Einheit ausgestalteten Mikrocontroller des Leistungsteils (54) die Einstellungsparameter überträgt, wobei das Motoranschlusskabel an der Platine des Anschlussteils angeschlossen ist.

2. Elektromotor nach Anspruch 1, ferner mit:
- einem im wesentlichen geschlossenen Motorgehäuse (4), das den Rotor (8) und den Stator enthält,
- einem Motorflansch (10), der einen Abschnitt des Motorgehäuses (4) bildet,
- einem im wesentlichen geschlossenen Elektronikgehäuse (6), das die Elektronik (56) aufnimmt und am Motorgehäuse (4) befestigt ist,
- wobei das Elektronikgehäuse (6) und das Motorgehäuse (4) zwei separate Gehäuseeinheiten bilden, das Elektronikgehäuse (56) am Motorflansch (10) befestigt ist, und ein Abschnitt (20) des Elektronikgehäuses (6) ein Zwischenflansch für die Aufhängung des Elektromotors (2) bildet.

3. Elektromotor nach Anspruch 1, der als Außenläufermotor (2) mit einem glockenförmigen Rotor (8) ausgestaltet ist, bei dem der Motorflansch als Statorplatte (10) ausgebildet ist.

4. Elektromotor nach Anspruch 2 oder 3, bei dem das Elektronikgehäuse (6) zweiteilig aus einem Unterteil (20) und einem Deckel (22) aufgebaut ist, wobei das Unterteil (20) am Motorflansch (10) befestigt ist.

5. Elektromotor nach Anspruch 4, bei dem das Unterteil (20) den Zwischenflansch bildet.

6. Elektromotor nach Anspruch 4 oder 5, bei dem das Unterteil (20) becherförmig mit einem im wesentlichen kreisrunden Bodenabschnitt (24), an dessen Außenseite Aufhängungsmittel (44) zum Aufhängen des Elektromotors (2) radial nach außen abstehen.

7. Elektromotor nach einem der Ansprüche 4 bis 6, mit einer elektrischen Verbindungsleitung (52), die die Statorwicklung im Motorinneren mit der Elektronik (56) im Elektronikgehäuse (6) verbindet und durch den Motorflansch (10) und durch das Elektronikgehäuse (6) geführt ist, wobei die Durchführung (16, 37) durch Motorflansch (10) und Elektronikgehäuse (6) nach außen abgedichtet ist.

8. Elektromotor nach Anspruch 7, bei der die Verbindungsleitung (52) eine im Elektronikgehäuse (6) vorgesehene elektrische Steckverbindung (50) umfaßt, die die Elektronik (56) mit der Statorwicklung elektrisch verbindet.

9. Elektromotor nach einem der Ansprüche 4 bis 8, bei dem der Deckel (22) des Elektronikgehäuses (6) an seiner Außenseite Kühlrippen (64) aufweist.

10. Elektromotor nach einem der vorhergehenden Ansprüche, bei der die Innenform des Elektronikgehäuses (6) an die Außenform der aufgenommenen Elektronik (56) angepaßt ist.

11. Elektromotor nach einem der Ansprüche 4 bis 10, bei dem das Unterteil (20) und/oder der Deckel (22) als Gußteil gefertigt sind.

12. Elektromotor nach Anspruch 11, bei dem das Anschlußteil in einem separaten Gehäuse (70) untergebracht ist, das am Deckel (22) des Elektronikgehäuses (6) lösbar befestigt ist.

## Claims

1. An electric motor having an electronics (56) for controlling the electric motor (2), wherein the electronics (56) is divided into a power part (54) and a connection part, wherein the connection part and the power part (54) are each formed on a separate board, respectively, wherein the boards are electrically connected to each other via a plug-in connection, wherein the connection part comprises a micro controller being configured as a master unit having a non-volatile memory for storing of the setting parameters of the electric motor (2), which transmits the setting parameters to a micro controller of the power part (54) being configured as slave unit, wherein the motor connection cable is connected to the board of the connection part.

2. An electric motor according to claim 1, further comprising:
- a substantially closed motor housing (4) containing the rotor (8) and the stator,
- a motor flange (10) forming a portion of the motor housing (4),
- a substantially closed electronics housing (6) receiving the electronics (56) and being attached to the motor housing (4)
- wherein the electronics housing (6) and the motor housing (4) form two separate housing units, wherein the electronics housing (56) is attached to the motor flange (10), and wherein a section (20) of the electronics housing (6) forms an intermediate flange for suspending the electric motor (2).

3. An electric motor according to claim 1, which is configured as an external rotor motor (2) having a bell-shaped rotor (8) in which the motor flange is designed as a stator plate (10).

4. An electric motor according to claim 2 or 3, wherein the electronics housing (6) is constructed in two parts from a lower part (20) and a cover (22), with the lower part (20) being fixed to the motor flange (10).

5. An electric motor according to claim 4, in which the lower part (20) forms the intermediate flange.

6. An electric motor according to claim 4 or 5, in which the lower part (20) is cup-shaped with a substantially circular base portion (24), on the outer side of the suspension means (44) for suspending the electric motor (2) protrude radially outwards.

7. An electric motor according to one of claims 4 to 6, having an electrical connecting cable (52), which connects the stator winding in the interior of the motor with the electronics (56) in the electronics housing (6) and is passed through the motor flange (10) and through the electronics housing (6), the feedthrough (16, 37) being sealed outwardly by the motor flange (10) and the electronics housing (6).

8. An electric motor according to claim 7, in which the connecting cable (52) comprises an electrical plug-in connection (50) that is provided in the electronics housing (6) and connects the electronics (56) with the stator winding.

9. An electric motor according to one of claims 4 to 8, in which the cover (22) of the electronics housing (6) comprises cooling fins (64) at its exterior.

10. An electric motor according to one of the preceding claims, in which the internal shape of the electronics housing (6) is adapted to the external shape of the electronics (56) housed therein.

11. An electric motor according to one of claims 4 to 10, in which the lower part (20) and/or the cover (22) are produced as cast parts.

12. An electric motor according to claim 11, in which the connection component is housed in a separate housing (70) that is releasably attached to the cover (22) of the electronics housing (6).

## Revendications

1. Moteur électrique comprenant un dispositif électronique (56) destiné à commander le moteur électrique (2), dans lequel le dispositif électronique (56) est divisé en une partie de puissance (54) et une partie de connexion, la partie de connexion et la partie de puissance (54) étant aménagées chacune sur une plaque qui lui est propre et connectées électriquement entre elles via un connecteur enfichable, la partie de connexion comportant un microcontrôleur, configuré en tant qu'unité maître, dotée d'une mémoire non volatile pour stocker les paramètres de réglage du moteur électrique (2), qui transmet les paramètres de réglage à un microcontrôleur, configuré en tant qu'unité esclave, de la partie de puissance (54), le câble de branchement du moteur étant branché à la plaque de la partie de connexion.

2. Moteur électrique selon la revendication 1, comprenant de plus
- un carter de moteur (4) sensiblement fermé contenant le rotor (8) et le stator,
- un flasque de moteur (10) formant un tronçon du carter de moteur (4),
- un boîtier électronique (6) sensiblement fermé accueillant le dispositif électronique (56) et fixé sur le carter de moteur (4),
- le boîtier électronique (6) et le carter de moteur (4) formant deux unités de boîtier séparées, le boîtier électronique (56) étant fixé au flasque de moteur (10), et un tronçon (20) du boîtier électronique formant un flasque intermédiaire pour suspendre le moteur électrique (2).

3. Moteur électrique selon la revendication 1, configuré en tant que moteur à induit extérieur (2) doté d'un rotor en forme de cloche (8), dans lequel le flasque de moteur est configuré en tant que plaque de stator (10).

4. Moteur électrique selon la revendication 2 ou la revendication 3, dans lequel le boîtier électronique (6) comporte deux parties, une partie inférieure (20) et un couvercle (22), la partie inférieure (20) étant fixée au flasque de moteur (10).

5. Moteur électrique selon la revendication 4, dans lequel la partie inférieure (20) forme le flasque intermédiaire.

6. Moteur électrique selon la revendication 4 ou la revendication 5, dans lequel la partie inférieure (20) est en forme de coupe dotée d'une partie de fond (24) sensiblement circulaire sur le côté extérieur duquel des moyens de suspension (44), destinés à la mise en suspension du moteur (2), sont en saillie radialement vers l'extérieur.

7. Moteur électrique selon l'une quelconque des revendications 4 à 6, comportant un conducteur de liaison électrique (52) qui relie l'enroulement de stator à l'intérieur du moteur au dispositif électronique (56) dans le boîtier électronique (6) et traverse le flasque de moteur (10) et le boîtier électronique (6), la traversée (16, 37) à travers le flasque de moteur (10) et le boîtier électronique (6) étant étanche vers l'extérieur.

8. Moteur électrique selon la revendication 7, dans lequel le câble de liaison (52) comprend un connecteur enfichable électrique (50), qui est prévu dans le boîtier électronique (6) et qui relie électriquement le dispositif électronique (56) à l'enroulement de stator.

9. Moteur électrique selon l'une quelconque des revendications 4 à 8, dans lequel le couvercle (22) du boîtier électronique (6) présente des nervures de refroidissement (64) à son côté extérieur.

10. Moteur électrique selon l'une quelconque des revendications précédentes, dans lequel la forme intérieure du boîtier électronique (6) est ajustée à la forme extérieure du dispositif électronique qu'il accueille.

11. Moteur électrique selon l'une quelconque des revendications 4 à 10, dans lequel la partie inférieure (20) et/ou le couvercle (22) sont des pièces moulées.

12. Moteur électrique selon la revendication 11, dans lequel la partie de connexion est logée dans un boîtier séparé (70) fixé de manière amovible au couvercle (22) du boîtier électronique (6).
